# FASCICULE DE BREVET EUROPEEN

(11) **EP 1 599 509 B1**
(45) Date de publication et mention de la délivrance du brevet: **07.05.2008**
(21) Numéro de dépôt: 04715314.3
(22) Date de dépôt: 27.02.2004
(51) Int. Cl.: C08F 8/44, C08F 255/02, C08F 220/00

(54) **PROC D POUR LA MODIFICATION DE POLYOL FINES GREFF ES, COMPOSITIONS ET ARTICLES COMPRENANT LES POLYOL& Eacute;FINES AINSI MODIFI ES**
VERFAHREN ZUR MODIFIZIERUNG VON PFROPFPOLYOLEFINEN, ZUSAMMENSETZUNGEN UND GEGENSTÄNDE, DIE SO MODIFIZIERTE POLYOLEFINE ENTHALTEN
METHOD FOR MODIFYING GRAFT POLYOLEFINS, COMPOSITIONS AND ARTICLES COMPRISING POLYOLEFINS MODIFIED THUS

(30) Priorité: 28.02.2003 FR 0302509; 29.09.2003 FR 0311394
(43) Date de publication de la demande: 30.11.2005
(73) Titulaire: SOLVAY (Société Anonyme), 1050 Bruxelles (BE)
(72) Inventeur: WAUTIER, Henri, B-7090 Braine-le-Comte (BE); MANFREDI, Dino, B-3530 Houthalen-Helchteren (BE); GAUTHY, Fernand, B-1780 Wemmel (BE)
(74) Mandataire: Jacques, Philippe
(86) Numéro de dépôt international: PCT/EP2004/002082
(87) Numéro de publication internationale: WO 2004/076501

(56) Documents cités:
- WO-A-00/66641
- DE-A- 19 502 206
- US-A1- 2002 107 329
- US-B1- 6 586 532

## Description

La présente invention concerne un procédé pour la modification de polyoléfines greffées, ainsi que les polyoléfines résultantes.

Un problème que posent souvent les polymères en général, et les polyoléfines en particulier, est leur tenue en fondu insuffisante lors de leur mise en oeuvre par extrusion.

Il est bien connu que la tenue en fondu du polyéthylène (PE) mais surtout, du polypropylène (PP), définie par une viscosité élongationnelle élevée, est insuffisante pour certains types de mise en oeuvre, tels que l'extrusion moussage, l'extrusion soufflage, le thermoformage et le soufflage, en particulier le soufflage 3D. En outre, pour certaines applications telles que le moussage et l'adhésivation par exemple, il peut s'avérer avantageux que la viscosité croisse (et en particulier, de manière exponentielle) en fonction du temps. Ce phénomène s'appelle le durcissement élongationnel (DE).

Des solutions proposées pour résoudre ce problème consistent à ramifier la structure macromoléculaire du PE ou du PP en créant des liaisons covalentes entre les macromolécules. Mais en pratique, les résines ramifiées fabriquées par couplage covalent souffrent toutes d'une tendance à la dégradation des ramifications sous l'influence du cisaillement inhérent à la mise en oeuvre. En outre, une ramification covalente irréversible (ou réticulation) importante entraîne des ruptures d'écoulement limitant la productivité et/ou la qualité du produit fini.

Pour pouvoir augmenter la densité de connexion entre macromolécules sans être limité par la réticulation, il est possible d'apporter une part substantielle des ramifications via des liaisons ioniques réversibles. Ceci permet d'augmenter la tenue en fondu tout en conservant le caractère thermoplastique et permet également, dans des conditions bien choisies, d'obtenir un DE.

Ainsi, la demande WO 00/66641 au nom de SOLVAY décrit un procédé selon lequel une polyoléfine greffée à l'aide d'un carbonyle et/ou d'un anhydride d'acide, préalablement épuré en monomère de greffage « libre » (non greffé) est soumise à neutralisation par au moins un composé comprenant des cations de métaux alcalins, alcalino-terreux et de transition. Ce procédé présente l'avantage de fournir une résine non réticulée (ayant typiquement une teneur en insolubles dans le xylène à 130°C inférieure au %) et présentant malgré tout un DE élevé. Il présente toutefois l'inconvénient de fournir des résines dont la fluidité est difficile à optimiser, c'est-à-dire de mener soit à des résines relativement fluides (de MFI relativement élevé), dont la tenue en fondu est insuffisante pour certaines applications, soit à des résines ayant un MFI trop faible, voire quasi nul, qui ne sont plus aptes à la mise en oeuvre par fusion.

En outre, selon une variante préférée de cette invention, le produit fini est épuré en produits de la réaction de neutralisation (acide organique dans le cas de l'utilisation de sels organiques comme agents neutralisants) par stripping ou par dégazage afin de déplacer l'équilibre de la réaction de neutralisation. Or, la demanderesse a constaté que l'épuration en sous produits de neutralisation était difficile et imparfaite dans le cas des acides organiques tels que l'acide acétique par exemple. Or, l'utilisation de sels métalliques organiques comme agents de neutralisation donne souvent de bons résultats en terme de durcissement élongationnel. A noter également que certains acides organiques (tels que les acides acétique et lactique par exemple) peuvent mener à une odeur désagréable du produit fini et à des problèmes organoleptiques. Enfin, l'utilisation de sels métalliques organiques induit aussi dans certains cas un jaunissement non souhaitable d'un point de vue esthétique, jaunissement qui s'accentue lors de mises en oeuvre ultérieures.

L'objectif de la présente invention est par conséquent de proposer un procédé pour la modification de polyoléfines greffées présentant des propriétés améliorées en ce qui concerne notamment la tenue en fondu et en particulier, la viscosité en fondu, et qui permet, dans certains cas, d'améliorer les propriétés organoleptiques, la couleur et l'odeur de ces polyoléfines.

A cet effet, la présente invention concerne un procédé pour la modification d'une polyoléfine greffée avec des groupes acides ou anhydrides par neutralisation au moins partielle de ces groupes avec au moins un agent neutralisant comprenant un sel organique (1) libérant un acide organique (I) lors de la neutralisation, selon lequel on fait réagir l'acide organique (I) issu de la neutralisation de la polyoléfine greffée avec au moins un sel inorganique (2) [procédé (P)].

Les polyoléfines modifiées obtenues par le procédé (P) conforme à la présente invention [polyoléfines modifiées (B1)] présentent des propriétés améliorées grâce à l'utilisation du sel inorganique (2). En effet, tout d'abord, l'utilisation de ce sel inorganique (2) permet de remédier aux problèmes de jaunissement susmentionnés. Ensuite, la réaction du sel inorganique (2) avec l'acide organique (I) forme d'une part, un acide inorganique (II) qui peut être partiellement éliminé par stripping ou dégazage, et d'autre part, un sel organique (3) qui ne perturbe pas la bonne marche du procédé et même, dans certains cas (selon le choix des réactifs : voir ci-dessous), permet de l'améliorer. Le fait d'éliminer l'acide organique du système permet par la même occasion d'éliminer les problèmes organoleptiques. En outre, le fait d'éliminer cet acide déplace l'équilibre de la réaction de neutralisation des fonctions acides ou anhydrides et donc, favorise cette neutralisation. Cet avantage (déplacement de la réaction d'équilibre) peut même être accentué moyennant le choix de réactifs (sels organique (1) et inorganique (2)) menant à un sel organique (3) qui est éliminé du milieu réactionnel (soit par précipitation, soit par réaction chimique avec certains composés présent dans le milieu réactionnel). Le fait de jouer avec plusieurs réactifs permet donc aisément de favoriser la réaction de neutralisation. Enfin, la demanderesse a constaté que le fait d'ajouter un sel inorganique après ou en même temps qu'un sel organique permettait de réduire la taille des agrégats résiduels de sel inorganique et ce faisant, d'améliorer les propriétés mécaniques de la polyoléfine modifiée obtenue. Ces agrégats ont en effet généralement une taille inférieure à 500 nm, voire à 300 nm et même à 100 nm, ce qui est nettement plus fin que les agrégats de sel inorganique obtenus lorsque ledit sel est utilisé seul comme agent de neutralisation.

Les polyoléfines utilisables dans le procédé selon l'invention sont des polymères d'oléfines linéaires contenant de 2 à 8 atomes de carbone telles que l'éthylène, le propylène, le 1-butène, le 1-pentène, le 1-hexène et le 1-octène, et elles sont greffées avec des fonctions acides ou anhydrides, par exemple par voie radicalaire. Ces oléfines contiennent de préférence de 2 à 6 atomes de carbone, plus particulièrement de 2 à 4 atomes de carbone. Elles peuvent être sélectionnées parmi les homopolymères des oléfines précitées et parmi les copolymères de ces oléfines, en particulier des copolymères d'éthylène ou de propylène avec un ou plusieurs comonomères, ainsi que parmi les mélanges de tels polymères. Les comonomères sont avantageusement choisis parmi les oléfines décrites ci-dessus, parmi les dioléfines comprenant de 4 à 18 atomes de carbone, telles que le 4-vinylcyclohexène, le dicyclopentadiène, le méthylène- et l'éthylidène-norbornène, le 1,3-butadiène, l'isoprène, le 1,3-pentadiène, et parmi les monomères styréniques comme le styrène et l'alpha-méthylstyrèné. La teneur pondérale en unités formées à partir des comonomères dans les polyoléfines est avantageusement inférieure à 50%, de préférence à 30% et de manière particulièrement préférée à 10% en poids. Il est entendu que par « polyoléfine », on entend aussi bien désigner les polymères tels que décrits ci avant pris isolément que leurs mélanges.

De préférence, la polyoléfine est choisie parmi les polymères de l'éthylène et/ou du propylène (c'est-à-dire que la polyoléfine comprend des unités récurrentes dérivées de l'éthylène et/ou du propylène). De manière particulièrement préférée, la polyoléfine est choisie parmi (i) les homopolymères de l'éthylène, (ii) les homopolymères du propylène, (iii) les copolymères composés d'unités récurrentes dérivées de l'éthylène et du propylène, (iv) les terpolymères composés d'unités récurrentes dérivées de l'éthylène, du propylène et d'une dioléfine comprenant de 4 à 18 atomes de carbone communément appelés caoutchoucs EPDM, ainsi que (v) les mélanges des polyoléfines précitées entre elles. Les homopolymères du propylène et les copolymères composés majoritairement (en poids) d'unités récurrentes dérivées du propylène et minoritairement (en poids) d'unités récurrentes dérivées de l'éthylène sont tout particulièrement préférés.

Selon un mode de réalisation particulier du procédé conforme à l'invention, la polyoléfine est un copolymère à blocs, de préférence un copolymère à blocs comprenant des unités récurrentes dérivées de l'éthylène et/ou du propylène. A titre d'exemples de copolymères à blocs, on peut citer les copolymères diblocs A*-B* et les copolymères triblocs A*-B*-A*, où les A* représentent des blocs de polystyrène homopolymère et les B* représentent des blocs d'un copolymère composé d'unités récurrentes dérivées de l'éthylène, d'une part, et d'unités récurrentes dérivées du propylène et/ou d'une dioléfine comprenant de 4 à 18 atomes de carbone comme le butadiène d'autre part, éventuellement hydrogénées (par exemple, les unités récurrentes dérivées du butadiène peuvent être hydrogénées en unités récurrentes butylènes). Selon ce mode particulier de réalisation du procédé selon l'invention, et par exception, la teneur pondérale en unités formées à partir des comonomères autres que l'éthylène et le propylène vaut avantageusement au moins 10%, de préférence au moins 20% en poids ; en outre, elle est avantageusement inférieure à 75% et de préférence inférieure à 50% en poids.

Selon la présente invention, la polyoléfine greffée est de préférence semi cristalline, c'est-à-dire qu'elle présente au moins un point de fusion.

Les groupes acides ou anhydrides qui sont greffés sur ces polyoléfines sont généralement choisis parmi les acides insaturés mono- ou dicarboxyliques et leurs dérivés et les anhydrides insaturés d'acide mono- ou dicarboxyliques et leurs dérivés. Ces groupes comprennent de préférence de 3 à 20 atomes de carbone. On peut citer comme exemples typiques l'acide acrylique, l'acide méthacrylique, l'acide maléique, l'acide fumarique, l'acide itaconique, l'acide crotonique, l'acide citraconique, l'anhydride maléique, l'anhydride itaconique, l'anhydride crotonique et l'anhydride citraconique. L'anhydride maléique est tout particulièrement préféré. En particulier, il donne de bons résultats dans le cas des polymères de l'éthylène et/ou du propylène.

La quantité de groupes acides ou anhydrides greffés est en général suffisante pour permettre une amélioration des propriétés (tenue en fondu et DE) de la polyoléfine greffée; elle est généralement supérieure ou égale à 0,01% en poids par rapport aux polyoléfines, voire à 0,02% en poids ou, mieux, à 0,03% en poids. En pratique, cette quantité est toutefois généralement inférieure ou égale à 2,0% en poids, préférentiellement à 1,5% et mieux encore, à 1,0% en poids. En effet, le greffage des groupes acides ou anhydrides est généralement initié par un générateur de radicaux dont il vaut mieux limiter la quantité pour éviter d'avoir affaire à une résine trop fluide dans le cas d'un polymère de propylène, ou trop peu fluide dans le cas d'un polymère d'éthylène. A titre de générateur de radicaux usuellement utilisés, on peut citer le peroxyde de t-butylcumyle, le 1,3-di(2-t-butylperoxyisopropyl)benzène, le 2,5-diméthyl-2,5-di(t-butylperoxy)hexane, le di(t-butyl)peroxyde et le 2,5-diméthyl-2,5-di(t-butylperoxy)-3-hexyne. Le 2,5-diméthyl-2,5-di-t-butylperoxyhexane (DHBP) mène à des polyoléfines greffées donnant de bons résultats dans le procédé selon la présente invention.

Les polymères greffés susceptibles d'être utilisés dans le procédé selon l'invention sont le plus souvent choisis parmi les homopolymères et les copolymères de l'éthylène et/ou du propylène dont l'indice de fluidité (MFI), est supérieur ou égal à 1, de préférence à 5, de manière particulièrement préférée à 10. Le MFI de ces résines est toutefois généralement inférieur ou égal à 5000 dg/min, de préférence à 4000 dg/min, de manière particulièrement préférée à 3000 dg/min. Le MFT ou indice de fluidité en fondu des polyoléfines est mesuré à 23 0°C sous un poids de 2,16 kg pour les polymères du propylène selon la norme ASTM D 1238 (1986) et à 190°C sous un poids de 5 kg pour les polymères de l'éthylène selon la norme ISO 1133 (1991).

Les polyoléfines greffées selon la présente invention contiennent de préférence peu de monomère libre (non greffé), par exemple une quantité inférieure ou égale à 500 ppm, voire à 400 ppm ou mieux, à 200 ppm.

Selon l'invention, la neutralisation des groupes acides ou anhydrides est réalisée par au moins un agent neutralisant comprenant un sel organique. De préférence, ce sel organique est un sel liquide à la température de mise en oeuvre. La demanderesse a en effet constaté que de tels sels donnaient de meilleurs résultats d'un point de vue réactivité. Des exemples de sels liquides aux températures usuelles de mise en oeuvre sont l'acétate et le formiate de Li (températures de fusion (Tf) respectives de 53-56°C et 94°C), l'acétate de Mg (Tf = 72-75°C), le formiate de K (Tf = 165-168°C), les acétate et stéarate de Zn (Tf = 237°C et 128-130°C), acétate de Cu (Tf = 115°C), les lactate et formiate de Na (Tf inférieure à la température ambiante et égale à 261°C respectivement), les acétate et formiate d'ammonium (Tf = 112-114 et 119-121°C). L'acétate de Zn et le lactate de Na donnent de bons résultats, et ce en particulier respectivement avec des polymères de l'éthylène et/ou du propylène.

Dans le procédé selon l'invention, le sel organique et le sel inorganique peuvent être introduits soit en même temps, soit de manière différée. L'introduction simultanée est.préférée dans le cas où le sel organique est le lactate de Na, tandis qu'une introduction différée (sel organique puis inorganique) est préférée dans le cas de l'acétate de Zn. En effet, ce dernier est instable en solution aqueuse de pH supérieur à 4 (précipitation de Zn(OH)2) et donc, est de préférence introduit en solution acide et non basique.

La quantité de sel organique ajoutée dépend de sa nature, de la nature de la polyoléfine greffée et de l'utilisation prévue (et donc des propriétés recherchées) de la polyoléfine modifiée. L'homme du métier peut facilement, de manière expérimentale, optimiser la quantité de sel en fonction de ces paramètres. Toutefois, le sel organique est généralement utilisé en une quantité de l'ordre de la valeur stoechiométrique par rapport aux groupes acides ou anhydrides. Dans le cas des polymères de propylène, la quantité de sel organique ajoutée sera généralement supérieure ou égale à 0,5 équivalent molaire (éq.mol.) par rapport au nombre de fonctions acides ou anhydrides, voire à 0,75 éq.mol, et dans certains cas, à 1 éq.mol. Dans le cas des polymères d'éthylène, cette quantité sera généralement inférieure ou égale à 3 éq.mol., voire à 2 éq.mol, et de préférence à 1,5 éq.mol.

Le sel organique est généralement introduit dans la polyoléfine greffée sous forme de solution aqueuse, ce qui est d'ailleurs particulièrement avantageux dans le cas des polyoléfines greffées avec des fonctions anhydrides. En effet, l'eau contenue dans cette solution sert alors à l'hydrolyse de cet anhydride en diacide, qui est la forme qui réagit effectivement avec le sel organique pour libérer l'acide organique correspondant.

Le sel inorganique (2) qui sert à capter l'acide organique (I) dans le procédé selon l'invention est de préférence, comme expliqué auparavant, choisi en fonction de la nature du sel organique (1) et de l'acide organique (I) pour donner respectivement un acide inorganique (II) et un sel organique (3) qui sont facilement éliminés du milieu réactionnel. Ainsi, de préférence, on veillera à ce que l'acide inorganique (II) soit un acide très volatile et/ou instable, qui se décompose à la température de mise en oeuvre pour libérer au moins un gaz (comme l'acide carbonique par exemple) et ce faisant, déplacer l'équilibre de la réaction entre l'acide organique (I) et le sel inorganique (2). De même, on veillera de préférence à ce que le sel organique (3) soit éliminé du milieu réactionnel par un moyen quelconque (il peut par exemple soit être insoluble à la température de mise en oeuvre, soit être identique au sel organique (1), auquel cas il réagira avec les fonctions acides ou anhydrides non encore neutralisées de la polyoléfine greffée).

Les sels inorganiques (2) peuvent être liquides à la température de mise en oeuvre ; toutefois, de bons résultats ont été obtenus avec des sels solides. Des sels inorganiques qui conviennent bien pour le procédé selon l'invention sont les carbonates de métaux alcalins et alcalino-terreux et de terres rares, et en particulier, les carbonates de Na et K. Le carbonate de Na donne de bons résultats et ce en particulier lorsque le sel organique utilisé est l'acétate de Zn ou un lactate de Na. Il permet notamment de remédier aux problèmes organoleptiques et de diminuer le jaunissement de manière particulièrement efficace.

La quantité de sel inorganique (2) ajoutée doit être suffisante pour neutraliser l'acide organique libéré. Ainsi, on ajoutera de préférence une quantité inférieure ou égale à 5 éq.mol., voire à 4 éq.mol, et de préférence à 3 éq.mol par rapport au nombre de fonctions acides ou anhydrides de la polyoléfine greffée.

Le sel inorganique (2) est de préférence également introduit dans la polyoléfine greffée sous forme de solution aqueuse, toujours pour bénéficier de l'effet d'hydrolyse de l'eau sur les fonctions anhydrides, le cas échéant.

On veillera à optimiser la concentration des solutions aqueuses de sels organique et inorganique de manière à éviter la précipitation de particules solides dans le dispositif d'introduction de ces solutions dans la polyoléfine greffée tout en limitant au maximum la quantité d'eau (car celle-ci doit être éliminée par la suite).

Pour réaliser le procédé selon la présente invention, on peut utiliser tous les dispositifs (« réacteurs ») connus à cet effet. Ainsi on peut travailler indifféremment avec des malaxeurs de type externe ou interne, ou des malaxeurs statiques. Les malaxeurs de type interne sont les plus appropriés et parmi ceux-ci les malaxeurs discontinus BRABENDER^{®} et les malaxeurs continus, tels que les extrudeuses, qui sont principalement constituées d'au moins une vis tournant dans un fourreau. Dans le procédé selon l'invention, l'extrudeuse susceptible d'être utilisée peut être monovis, bi-vis contra- ou co-rotative, de type autonettoyante. Les extrudeuses bi-vis auto-nettoyantes donnent de bons résultats.

Une extrudeuse dans le sens de cette variante de la présente invention comporte au moins, dans l'ordre, les parties suivantes : une zone d'alimentation, une zone de fusion, une zone d'injection de réactifs, une zone d'homogénéisation/réaction, une zone de dégazage et une zone d'évacuation de la matière fondue. De manière préférée, la zone de dégazage comporte deux évents : un premier pour un dégazage sous pression atmosphérique et un second pour un dégazage plus poussé, sous vide. De préférence, ce dernier dégazage se fait sous un vide poussé, par exemple inférieur à 10 mbar, voire à 5 mbar une valeur maximale de 2 mbar donnant de bons résultats. Le sel organique est généralement introduit dans la zone d'injection et dans le cas d'une introduction différée de sel inorganique, celui-ci est avantageusement introduit entre les deux évents de dégazage. La zone d'évacuation peut en outre être suivie d'un dispositif de granulation ou d'un dispositif donnant à la matière extrudée une forme donnée (film par exemple).

Une extrudeuse particulièrement préférée pour la réalisation du procédé selon l'invention est constituée d'un alliage résistant à la corrosion. Un alliage particulièrement préféré est un alliage constitué majoritairement de nickel ou de cobalt.

Dans le procédé selon l'invention, les sels organique et inorganique sont introduits dans la ou les zones d'injection par tout dispositif connu. De préférence, ils sont introduits en utilisant un injecteur haute pression qui est de préférence à base d'un alliage résistant à la corrosion tel que décrit ci-dessus.

Dans le procédé selon l'invention, la polyoléfine greffée peut être alimentée au réacteur choisi par tout moyen connu. Dans le cas d'une extrudeuse, elle peut être alimentée dans la zone d'alimentation par un doseur gravimétrique. Alternativement, elle peut être alimentée sous forme fondue via une autre extrudeuse, par exemple celle dans laquelle on a réalisé le greffage par extrusion réactive. Enfin, le greffage par extrusion réactive et la modification de la polyoléfine greffée peuvent avoir lieu dans une même extrudeuse. Toutefois, ces deux dernières variantes présentent l'inconvénient de réduire les débits de production, la purification de la polyoléfine greffée en monomère libre devant alors se faire en ligne, le cas échéant.

La température à laquelle se déroule le procédé selon l'invention est généralement supérieure à la température de fusion et inférieure à la température de décomposition de la polyoléfine greffée et de préférence, supérieure à la température de fusion du sel organique dans la zone où celui-ci réagit avec la polyoléfine greffée. Cette température sera en général d'au moins 180°C, le plus souvent au moins 190°C, en particulier au moins 200°C. Généralement on travaille à une température ne dépassant pas 400°C, le plus souvent pas 300°C et plus particulièrement pas 250°C.

La durée nécessaire pour effectuer le procédé conforme à la présente est généralement de 10 secondes à 10 minutes, voire de 30 secondes à 5 minutes.

Au cours du procédé, on peut incorporer à un moment quelconque un ou plusieurs additifs usuels des polyoléfines, tels que par exemple des agents stabilisants, des additifs anti-oxydants, des agents antistatiques, des colorants organiques ou minéraux et des matières de charge, etc. pour autant qu'ils n'interfèrent pas avec la neutralisation des groupes acides ou anhydrides. De préférence, et justement pour éviter cette interférence, dans le cas où le procédé a lieu en extrudeuse, le ou les additifs éventuels seront ajoutés après le second dégazage, juste avant la sortie.

Dans une forme préférée du procédé selon l'invention, au moins un stabilisant est ajouté pendant le procédé. De préférence, le stabilisant mis en oeuvre dans cette variante du procédé selon la présente invention est choisi parmi les composés comprenant un groupement phénol stériquement encombré, parmi les composés phosphorés et parmi leurs mélanges. Il s'agit par exemple de substances, telles que le 1,3,5-triméthyl-2,4,6-tris(3,5-t-butyl-4-hydroxybenzyl)benzène, le pentaérythrityle tétrakis-(3,5-di-t-butyl-4-hydroxyphénylpropionate), le tris-(2,4-di-t-butylphényl)phosphite ou du mélange de pentaérythrityle tétrakis-(3,5-di-t-butyl-4-hydroxyphénylpropionate) et de tris-(2,4-di-t-butylphényl)phosphite, de préférence en quantités égales. Le stabilisant préféré est le 1,3,5-triméthyl-2,4,6-tris(3,5-t-butyl-4-hydroxybenzyl)benzène.

La présente invention concerne également des polyoléfines (PO) modifiées à la fabrication desquelles le procédé selon l'invention est particulièrement bien adapté. La demanderesse a en effet constaté que le procédé selon l'invention permettait d'obtenir des polyoléfines modifiées comportant des groupes acides ou anhydrides avec un taux de neutralisation élevé présentant une tenue en fondu particulièrement améliorée caractérisée par une augmentation exponentielle de la viscosité élongationnelle (durcissement élongationnel ou DE) et par un MFI idéal (inférieur à une valeur donnée), tout en étant peu ou pas réticulées (c'est-à-dire présentant un taux d'insolubles dans le xylène à 130°C inférieur au %). Par « durcissement élongationnel » selon cette variante de l'invention, on entend désigner une augmentation exponentielle de.le viscosité élongationnelle (exprimée en kPa.s) mesurée à l'état fondu (en particulier à 190°C pour les résines PE et à 230°C pour les résines PP), en fonction du temps (exprimé en s) et pour un gradient d'élongation (exprimé en s⁻¹) de 1. En général, la viscosité élongationnelle des polyoléfines modifiées selon l'invention passe de moins de 20 à plusieurs centaines, voire à plus de 1000 kPa.s au bout de 2 à 3 s.

Cette combinaison de propriétés est exceptionnelle et est mise en rapport d'une part avec le fait que l'acide organique (I), qui joue le rôle de plastifiant à fortes doses, est éliminé par réaction avec le sel inorganique (2) et d'autre part, avec une teneur accrue en agrégats ioniques.

Par conséquent, la présente invention concerne également les polyoléfines modifiées susceptibles d'être obtenues par un procédé tel que décrit ci-avant et comprenant des groupements acides ou anhydrides au moins partiellement neutralisés par des ions métalliques, et présentant :
- une teneur en insolubles dans le xylène à 130°C inférieure à 1%
- une augmentation exponentielle de la viscosité élongationnelle en fonction du temps
- un MFI inférieur ou égal à 6 dg/min
   [polyoléfines modifiées (B2)].

La teneur en insolubles dans le xylène à 130°C peut être déterminée par toute méthode connue. Une méthode qui convient bien consiste à dissoudre 10g de la polyoléfine sous forme de granules dans 3 00 ml de xylène et de porter l'ensemble à reflux pendant 2h. La teneur en insolubles est inférieure à 1% lorsque la solution obtenue est entièrement transparente (i.e. absence de zones de trouble).

Les polyoléfines modifiées selon l'invention possèdent un MFI inférieur ou égal à 6, voire à 5 dg/min. Toutefois, afin de rester aptes à la mise en oeuvre, leur MFI sera généralement supérieur ou égal à 0,01 dg/min, voire à 0,1 dg/min.

Elles ont généralement en outre un taux de neutralisation des fonctions acides ou anhydrides supérieur ou égal à 40%, voire à 50% et, dans certains cas, à 70%. Ce taux de neutralisation est toutefois inférieur ou égal à 100%, généralement à 90%. Ce taux de neutralisation peut être mesuré par toute méthode connue. Une méthode qui donne de bons résultats consiste à analyser l'échantillon par IR avant et après neutralisation, tout en sachant que l'anhydride maléique greffé sous sa forme non hydrolysée présente une bande d'adsorption vers 1790 cm⁻¹, l'anhydride maléique greffé sous sa forme hydrolysée en possède une vers 1725 cm⁻¹ et l'anhydride maléique greffé sous sa forme neutralisée, une vers 1580 cm⁻¹.

Bien que ces résines présentent un taux de neutralisation élevé, leur teneur en cations est toutefois faible. Ainsi, pour un cation de nature donnée, elle est généralement inférieure ou égale à 1% en poids, voire à 0,8% en poids (par rapport au poids total de la polyoléfine modifiée). Cette teneur peut même dans certains cas être inférieure ou égale à 0,7% dans le cas des ions Na⁺ et à 0,5%. dans le cas des ions Zn⁺⁺.

Les polyoléfines modifiées selon l'invention ont des propriétés voisines de celles des polyoléfines de base (qu'elles soient greffées ou non), et en particulier, une tenue en température et des propriétés cristallines (température de fusion (Tf) et de cristallisation notamment, mesurées par la technique DSC (Differential Scanning Calorimetry) selon la norme ISO FDIS 11357-3 (1999), au deuxième passage et avec une vitesse de balayage de 10 K/min) très proches. Ceci implique que l'écart entre la Tf d'une résine greffée et de son homologue non greffée est généralement inférieur ou égal à 5°C, voire à 3°C. Partant de polymères de l'éthylène et/ou du proyplène, ceci implique généralement une Tf supérieure à 100°C.

En outre, les polyoléfines modifiées selon l'invention présentent des propriétés mécaniques améliorées par rapport aux polyoléfines de base. Ainsi, dans le cas de polyoléfines modifiées à base de PP homopolymère, leur module en traction E (mesuré à 23°C selon la norme ISO 527-1) est généralement supérieur ou égal à 2000 MPa, et dans le cas de résines modifiées à base de HDPE (polyéthylène haute densité), un module supérieur ou égal à 1000 MPa. En outre, dans le cas des polyoléfines modifiées à base de PP homopolymère, on observe une nette amélioration de la résistance mécanique qui se traduit par une HDT (« Heat Distorsion Temperature » ou température de fléchissement sous charge mesurée selon la norme ISO 75-2 (9/1993)) supérieure ou égale à 120°C sous une charge de 0,45 MPa et supérieure ou égale à 60°C sous une charge de 1,8 MPa. Enfin, la tenue au fluage des polyoléfines modifiées est substantiellement améliorée par rapport à celle des résines de base; ainsi par exemple, lors de mesures effectuées à 80°C et sous une charge de 5 MPa, les polyoléfines modifiées selon l'invention présentent généralement une déformation au bout de 100 h qui est inférieure à celles des polyoléfines de base d'au moins 15%, voire d'au moins 20%, et même d'au moins 25%.

Les polyoléfines modifiées selon l'invention présentent également généralement une résistance à l'oxydation (mesurée selon le test PIO2) exceptionnelle. Le test PIO2 de résistance à l'oxydation consiste à :
- mettre 20 mg de résine sous forme de pastille,
- thermostatiser cette pastille à la température voulue (en particulier à 190°C pour les polyoléfines à base de propylène et à 210°C pour les polyoléfines à base d'éthylène) sous flux d'azote,
- démarrer la mesure au temps t0 sous flux d' oxygène,
- mesurer le temps requis (en minutes) pour que la résine commence à se dégrader (oxyder), c'est-à-dire le temps requis pour l'apparition d'un exotherme.

Les polyoléfines modifiées à base de PP selon l'art antérieur ont un PIO2. inférieur à 60 min., alors que les polyoléfines à base de PP modifiées selon l'invention peuvent avoir un PIO2 supérieur ou égal à 60 min., dans certains cas même supérieur ou égal à 70 min., voire à 80 min. Dans le cas des polyoléfines à base de PE modifiées selon l'invention, celles-ci ont un PIO2 généralement supérieur ou égal à 50 min., voire à 60 min., voire même à 75 min.

A noter enfin que comme déjà évoqué précédemment, les polyoléfines modifiées selon l'invention présentent des propriétés organoleptiques ainsi qu'un jaunissement améliorés par rapport aux polyoléfines modifiées de l'art antérieur. En ce qui concerne ce dernier par exemple, le YI (« Yellow Index » ou indice de jaune mesuré selon les normes ASTM D-1925 et ASTM E-313) des polyoléfines selon l'invention est généralement inférieur ou égal à 40, voire à 30.

Les polyoléfines modifiées selon l'invention trouvent une application intéressante dans la préparation de mousses, notamment de mousses polypropylène et de mousses polyéthylène haute densité fabriquées par extrusion moussage. En particulier, les polyoléfines modifiées trouvent une application intéressante dans l'obtention d'objets façonnés par extrusion moussage, thermoformage ou soufflage, en particulier par soufflage 3D. Un autre domaine d'application est l'amélioration de l'adhésion dans les applications de compatibilisation, multicouches et de scellage.

Par ailleurs, les polyoléfines modifiées selon l'invention présentent également dans certains cas des propriétés adhésives supérieures à celles des polyoléfines greffées non modifiées. Ainsi par exemple, elles présentent une meilleure adhésion en présence d'huiles et de graisses et ce sur de nombreux substrats. La contrainte maximale mesurée dans un test d'adhérence (test selon la norme NFT 76-104) avec ces polyoléfines et des supports huileux (tôles d'acier par exemple) est en effet généralement au moins égale à 8 MPa et les ruptures observées sont généralement de type adhésif (selon la définition de la norme NFT 76-107). Par conséquent, ces polyoléfines conviennent bien en tant qu'adhésifs notamment dans des emballages de produits gras (alimentaires, cosmétiques...), dans les réservoirs et tuyauteries pour hydrocarbures (essence). Dans le cas des polyoléfines modifiées à base de PP, l'adhésion sur des supports en A1 (éventuellement traités en surface) est également améliorée par rapport à celle des PP greffés non modifiés (c'est-à-dire que la contrainte maximale en test d'adhérence est également au moins égale à 8 MPa et les ruptures, adhésives).

La présente invention a également pour objet une composition polymérique qui présente de nombreux avantages par rapport aux compositions polymériques de l'art antérieur sans en présenter les inconvénients.

A cet effet, l'invention concerne une composition polymérique contenant
(A) au moins un polymère, et
(B) au moins une polyoléfine modifiée choisie parmi les polyoléfines modifiées obtenues par le procédé conforme à l'invention [procédé (P)], tel que décrit précédemment [polyoléfines modifiées (B1)], et les polyoléfines modifiées susceptibles d'être obtenues par ledit procédé, telles que décrites précédemment [polyoléfines modifiées (B2)].

Ainsi, l'invention concerne une composition polymérique contenant
(A) au moins un polymère, et
(B) au moins une polyoléfine modifiée choisie parmi
   - les polyoléfines modifiées (B1), à savoir les polyoléfines greffées avec des groupes acides ou anhydrides, modifiées par un procédé selon lequel on neutralise au moins partiellement ces groupes avec au moins un agent neutralisant comprenant un sel organique (1) libérant un acide organique (I) lors de la neutralisation, et on fait réagir l'acide organique (I) issu de la neutralisation des polyoléfines greffées avec au moins un sel inorganique (2) [procédé (P)], et
   - les polyoléfines modifiées (B2), à savoir les polyoléfines modifiées susceptibles d'être obtenues par le procédé (P), comprenant des groupements acides ou anhydrides au moins partiellement neutralisés par des ions métalliques et présentant une teneur en insolubles dans le xylène à 130°C inférieure à 1%, une augmentation exponentielle de la viscosité élongationnelle en fonction du temps, et un MFI inférieur ou égal à 6 dg/min.

Le procédé (P) qui est utilisé pour synthétiser les polyoléfines modifiées (B1) des compositions selon la présente invention répond aux mêmes caractéristiques et préférences, à quelque niveau de préférence que ce soit, que celles du procédé (P) conforme à l'invention, qui est décrit depuis le paragraphe commençant par « A cet effet, la présente invention concerne un procédé pour la modification d'une polyoléfine greffée » jusqu'au paragraphe se terminant par « Le stabilisant préféré est le 1,3,5-triméthyl-2,4,6-tris(3,5-t-butyl-4-hydroxybenzyl)benzène ».

De même, les polyoléfines modifiées (B2) des compositions selon la présente invention répondent aux mêmes caractéristiques et préférences, à quelque niveau de préférence que ce soit, que celles des polyoléfines modifiées (B2) conformes à l'invention qui sont décrites depuis le paragraphe commençant par « Par conséquent, la présente invention concerne également les polyoléfines modifiées susceptibles d'être obtenues par un procédé tel que décrit ci-avant » jusqu'au paragraphe se terminant par « la contrainte maximale en test d'adhérence est également au moins égale à 8 MPa et les ruptures, adhésives ».

La polyoléfine modifiée est choisie de préférence parmi les polyoléfines modifiées (B1).
(A) peut être notamment :
   - un polycondensat aromatique tel qu'un polyphtalamide, un polyamide obtenu par condensation de la métaxylylènediamine et d'au moins un diacide, un polyamideimide, un polyester aromatique tel qu'un polyester à cristaux liquides, un polysulfone, un polyaryléthercétone, ou un polysulfure de phénylène ;
   - un polyadduit tel qu'un polymère halogéné comme le PVC, le PVDC, le PVDF et le PTFE, un polyester vinylique, un polymère acrylique, un polymère du styrène tel que le polystyrène, un polymère d'un alcadiène tel que le polybutadiène, un polymère du styrène et d'un alcadiène tel que le caoutchouc SB S, un homopolymère du styrène, ou une polyoléfine non fonctionnalisée.

(A) est de préférence une polyoléfine non fonctionnalisée c'est-à-dire un polymère d'oléfine non fonctionnalisé et, de manière particulièrement préférée, un polymère d'oléfine linaire non fonctionnalisé.

A titre d'exemple d'oléfines linéaires, on peut citer l'éthylène, le propylène, le 1-butène, le 1-pentène, le 1-hexène, le 1-octène et le 1-décène.

L'oléfine linéaire contient de préférence de 2 à 8 atomes de carbone, de manière particulièrement préférée de 2 à 6 atomes de carbone, et de manière tout particulièrement préférée de 2 à 4 atomes de carbone. D'excellents résultats ont été obtenus lorsque l'oléfine linéaire était l'éthylène et/ou le propylène.

La polyoléfine non fonctionnalisée peut être notamment un homopolymère des oléfines précitées ou un copolymère des oléfines précitées avec un ou plusieurs comonomères.

Les comonomères sont avantageusement choisis parmi les oléfines décrites ci-avant, parmi les dioléfines comprenant de 4 à 18 atomes de carbone, telles que le 4-vinylcyclohexène, le dicyclopentadiène, le méthylène- et l'éthylidène-norbornène, le 1,3-butadiène, l'isoprène et le 1,3-pentadiène, et parmi les monomères styréniques comme le styrène et l'alpha-méthylstyrène. De préférence, ils sont choisis parmi les oléfines linéaires ci-dessus.

La teneur pondérale en unités comonomériques dans la polyoléfine non fonctionnalisée de la composition selon l'invention est avantageusement inférieure à 50%, de préférence à 30% et de manière particulièrement préférée à 10% en poids.

A titre d'exemples de copolymères d'oléfine non fonctionnalisés, on peut citer les copolymères statistiques du propylène (> 90% en poids) et de l'éthylène (< 10% en poids), comme le copolymère ELTEX^{®} KS.

La polyoléfine non fonctionnalisée est sélectionnée de manière particulièrement préférée parmi les homopolymères des oléfines précitées, de manière tout particulièrement préférée parmi les homopolymères de l'éthylène et les homopolymères du propylène, et de la manière la plus préférée parmi les homopolymères du propylène, comme le polypropylène ELTEX^{®} HL.

Une composition particulière conforme à l'invention comprend, à titre de polymère (A), une polyoléfine non fonctionnalisée qui est un copolymère à blocs, de préférence un copolymère à blocs comprenant des unités récurrentes dérivées de l'éthylène et/ou du propylène. A titre d'exemples de copolymères à blocs, on peut citer les copolymères diblocs A*-B* et les copolymères triblocs A*-B*-A*, où les A* représentent des blocs de polystyrène homopolymère et les B* représentent des blocs d'un copolymère composé d'unités récurrentes dérivées de, l'éthylène, d'une part, et d'unités récurrentes dérivées du propylène et/ou d'une dioléfine comprenant de 4 à 18 atomes de carbone comme le butadiène d'autre part, éventuellement hydrogénées (par exemple, les unités récurrentes dérivées du butadiène peuvent être hydrogénées en unités récurrentes butylènes). Pour ce qui concerne cette composition particulière selon l'invention et par exception, la teneur pondérale en unités formées à partir des comonomères autres que l'éthylène et le propylène de la polyoléfine non fonctionnalisée copolymère à blocs vaut avantageusement au moins 10%, de préférence au moins 20% en poids ; en outre, elle est avantageusement inférieure à 75% et de préférence inférieure à 50% en poids. Un exemple de cette composition particulière conforme à l'invention est une composition comprenant, à titre de polymère (A), un polypropylène homopolymère et un copolymère à blocs styrène - éthylène/butylène - styrène comprenant environ 30% en poids de styrène (appelé communément caoutchouc SEBS), et, à titre de polyoléfine modifiée (B), un polypropylène homopolymère greffé anhydride maléique et un caoutchouc SEBS greffé anhydride maléique, tous deux modifiés selon le procédé conforme à l'invention.

Le poids de (A), rapporté au poids total de la composition, est supérieur avantageusement à 50%, de préférence à 75% et de manière particulièrement préférée à 85%.

Le poids de (B), rapporté au poids total de la composition, est supérieur avantageusement à 0,5%, de préférence à 1%, de manière particulièrement préférée à 2%.

Le poids de (B), rapporté au poids total de la composition, est inférieur avantageusement à 40%, de préférence à 20%, de manière particulièrement préférée à 10% et de manière tout particulièrement préférée à 6%.

La composition selon l'invention peut être préparé par tout procédé connu, notamment les procédés en solution, les procédés se déroulant dans un malaxeur, par exemple un malaxeur BRABENDER^{®}, et les procédés se déroulant en extrudeuse, par exemple une extrudeuse PRISM^{®} De bons résultats sont habituellement obtenus si les compositions selon l'invention sont préparées par un procédé se déroulant en extrudeuse.

Les compositions selon l'invention peuvent éventuellement contenir en outre des additifs usuels des compositions polymérique, en particulier des additifs usuels des compositions de polyoléfine, en une quantité allant de préférence jusqu'à 10%, de manière particulièrement préférée jusqu'à 5% en poids, rapporté au poids total de la composition.

A titre d'exemples de tels additifs usuels, on peut citer les antioxydants tels que les phénols encombrés stériquement, les lubrifiants, les matières de charge, les colorants, les agents nucléants, les agents anti-UV, les agents antiacides comme le stéarate de calcium, les agents de modification de la cristallinité comme les copolymères de l'éthylène et de l'acrylate de n-butyle ou de l'acrylate d'éthyle, les agents désactivateurs de métaux et les agents antistatiques.

Les compositions selon l'invention contiennent de préférence de 0,1 à 0,5 % en poids, rapporté au poids total de la composition, d'un phénol encombré stériquement comme le 1,3,5-triméthyl-2,4,6-tris(3,5-di-t-butyl-4-hydroxybenzyl)benzène et le pentaérythrityl tétrakis-(3,5-di-t-butyl-4-hydroxyphénylpropionate).

La composition selon la présente invention présente un niveau global de propriétés nettement amélioré par rapport à celui des compositions de l'art antérieur. Cette nette amélioration résulte de l'ajout aux compositions polymériques, en particulier aux compositions contenant une polyoléfine non fonctionnalisée, d'une polyoléfine modifiée obtenue ou susceptible d'être obtenue par le procédé selon l'invention. Les propriétés améliorées peuvent notamment être la tenue en fondu (augmentation exponentielle de la viscosité élongationnelle et faible MFI amélioré, tout en maintenant une faible teneur en polymère réticulé), ainsi que les propriétés mécaniques comme le module en traction. En outre, dans le cas de compositions de PP homopolymère additivées par aussi peu que quelques pour-cent (par exemple, 5%) en poids d'une polyoléfine modifiée à base de PP homopolymère, on a observé une nette amélioration de la résistance mécanique qui se traduit par un accroissement de près de 10°C de la température de fléchissement sous charge ; le comportement au test VICAT, la résistance à l'impact et la tenue au fluage sont eux aussi substantiellement améliorés. Enfin, la composition selon l'invention présente également dans certains cas des propriétés adhésives supérieures à celles des compositions à base de polyoléfine non fonctionnalisée et exemptes de polyoléfine modifiée. Ainsi par exemple, elles présentent une meilleure adhésion en présence d'huiles et de graisses et ce sur de nombreux substrats. Dans le cas de compositions contenant un PP non fonctionnalisé et un PP greffé selon l'invention, l'adhésion sur des supports en aluminium (éventuellement traités en surface) est également améliorée par rapport à celle des compositions exemptes de PP greffé.

La présente invention a également pour objet un article fabriqué à base d'un polymère ou d'une composition polymérique qui présente de nombreux avantages par rapport aux articles de l'art antérieur sans en présenter les inconvénients.

A cet effet, l'invention concerne un article comprenant soit la composition conforme à l'invention, telle que décrite précédemment, soit une polyoléfine modifiée choisie parmi les polyoléfines modifiées obtenues par le procédé conforme à l'invention [procédé (P)], tel que décrit précédemment [polyoléfines modifiées (B1)] et les polyoléfines modifiées susceptibles d'être obtenues par ledit procédé, telles que décrites précédemment [polyoléfines modifiées (B2)].

Un premier choix préféré pour l'article selon l'invention est celui effectué parmi les fibres de verre, les fibres naturelles et les fils métalliques ensimés d'une couche de la composition ou de la polyoléfine modifiée, ainsi que parmi les surfaces métalliques et les surfaces non métalliques revêtues d'une couche de la composition ou de la polyoléfine modifiée.

A titre d'exemples de surfaces non métalliques, on peut citer les surfaces en ciment, les surfaces en verre, les surfaces en pierre et les surfaces en polymère.

Un second choix préféré pour l'article selon l'invention est celui effectué parmi les tubes, les films, les feuilles, les fibres, les mousses et les corps creux soufflés faits en la composition ou en la polyoléfine modifiée.

A titre d'exemples de corps creux soufflés, on peut citer les bouteilles.

Les tubes sont avantageusement destinés à l'industrie pétrolière, à l'industrie du bâtiment ou à l'industrie automobile.

Les films peuvent être notamment des films alimentaires scellables en milieu gras ou des films imprimables avec des encres aqueuses.

Un troisième choix préféré pour l'article selon l'invention est celui d'une pièce d'un véhicule automoteur sélectionnée parmi les réservoirs à carburant, les tubulures à carburant, les pare-chocs et les tableaux de bord.

L'article conforme à l'invention présente de nombreux avantages. Il est habituellement de plus faible épaisseur ou plus léger que les articles de même nature de l'art antérieur. Il présente une résistance à la salissure, à la rayure, à l'abrasion et aux graffiti. Lorsque l'article selon l'invention est un film, celui-ci présente une résistance élevée à la déchirure et peut être collé en milieux souillés.

Finalement, un dernier aspect de l'invention prévoit l'utilisation soit de la composition conforme à la présente invention, soit d'une polyoléfine modifiée choisie parmi les polyoléfines modifiées obtenues par le procédé conforme à l'invention [procédé (P)], tel que décrit précédemment [polyoléfines modifiées (B1)] et les polyoléfines modifiées susceptibles d'être obtenues par ledit procédé, telles que décrites précédemment [polyoléfines modifiées (B2)], en tant qu'agent de compatibilisation et/ou de dispersion d'une polyoléfine avec un polymère ou une matière de charge qui est incompatible avec la polyoléfine.

A titre d'exemples dé polymères incompatibles avec les polyoléfines, on peut citer les résines époxy, les résines fluorées et particulièrement le poly(fluorure de vinylidène), les polyamides et les polyesters.

De préférence, la composition selon l'invention ou la polyoléfine choisie comme indiqué ci-avant est utilisée en tant qu'agent de compatibilisation et/ou de dispersion d'une polyoléfine dans une résine époxy.

Des matières de charge incompatibles sont par exemple des fibres naturelles, comme le lin, le chanvre, la jute et la cellulose, ainsi que les fibres de verre, le verre, la silice, le talc, le carbonate de calcium et le noir de carboné. Des substrats métalliques sont par exemple l'acier ou l'aluminium.

Les exemples qui suivent sont destinés à illustrer l'invention sans pour autant en limiter la portée.

### Exemple de référence 1 (non conforme à l'invention) et exemple 2 (conforme à l'invention) : polyoléfines greffées à base de propylène (PP) neutralisées à l'acétate de Zn

On a utilisé :
- une résine PRIEX^{®} 20070, un polypropylène modifié chimiquement par SOLVAY. Il s'agit d'un PP greffé anhydride maléique à raison de 0.1% en poids qui présente un MFI_{2.16 kg. 230ºC} de 64 g/10min
- des solutions d'acétate de Zn (Zn(Ac)2) et de Na2CO3 à 200 g/l, en des quantités respectives de 3 éq.mol. (équivalents molaires par rapport au nombre de fonctions acides carboxyliques de la résine) pour le Zn(Ac)2 et de 0 éq.mol (contre-exemple 1) et 2 éq.mol. (exemple 2) pour le Na2CO3
- une extrudeuse CLEXTRAL modèle BC 21 qui est une extrudeuse double vis co-rotative de diamètre 25 mm et de longueur 1000 mm (L/D = 40). Le fourreau est constitué de 10 zones (Z1 à Z10) indépendantes ainsi que d'une convergence et d'une filière.
- une vitesse des vis de 200 tr/min, un débit de 10 kg/h et le profil de température suivant : Z1 (alimentation de la résine): 70°C ; Z2 : 170°C ; Z3 (fusion) et Z4 (injection Zn(Ac)2): 200°C ; Z5 à Z8 (réaction, dégazage à pression atmosphérique, réaction, dégazage sous vide à une consigne de 2 mbar): 240°C ; Z9 : 230°C) ; Z10 : 220°C ; convergence et filière : 220°C
- des injecteurs haute pression pour l'injection respectivement du Zn(Ac)2 en Z4 et du Na2CO3 en Z7, le cas échéant (exemple 2).

La viscosité élongationnelle des résines modifiées obtenues a été déterminée au moyen d'un rhéomètre commercialisé par RHEOMETRICS sous la dénomination RME (RHEOMETRICS ELONGATIONAL RHEOMETER FORMELTS). L'échantillon (55x9x2 mm) a été obtenu par extrusion et a été soumis à une procédure de relaxation puis à la mesure de la variation, à 190°C, de la viscosité élongationnelle à l'état fondu (exprimée en kPa.s) en fonction du temps (exprimé en s) pour un gradient d'élongation (exprimé en s⁻¹) de 1. On a obtenu dans les deux cas (contre-exemple 1 et exemple 2), des résines présentant un durcissement élongationnel (la viscosité élongationnelle passant de 0 à plus de 1000 kPa.s au bout de 2 à 3 s).

En outre, la teneur en insolubles dans le xylène à 130°C (déterminée par la méthode décrite ci avant) a été mesurée pour ces deux résines et est inférieure au pour-cent.

Le MFI (2.16 kg, 230°C) est de 8.6 dg/min pour la résine issue du contre-exemple 1, et de 0,5 dg/min pour la résine issue de l'exemple 2. En outre, cette dernière présente un aspect plus blanc et une absence d'odeur d'acide acétique par comparaison avec la première.

L'exemple de référence 1 a été répété en augmentant la dose de Zn(Ac)2 respectivement à des valeurs de 4 et 5 éq.mol., mais la valeur du MFI est restée sensiblement la même.

### Exemple de référence 3 et exemples 4 et 5 (conformes à l'invention) : polyoléfines greffées à base de propylène (PP) neutralisées au lactate de Na (NaLac)

La même résine de départ et les mêmes paramètres expérimentaux qu'aux exemples précédents ont été utilisés. Toutefois, l'agent neutralisant était cette fois le NaLac (lactate de sodium : mélange de D- et L-isomère de chez ACROS : 256.4 ml de solution à 60% en poids par litre de solution aqueuse), utilisé à raison de 5 éq.mol. Le Na2CO3 a été utilisé à raison de 0 éq.mol (contre-exemple 3), 1 éq.mol. (exemple 4) et 2 éq.mol. (exemple 5). Le MFI (2,16 kg, 230°C) des résines modifiées obtenues était respectivement de 23,2 dg/min, 5 dg/min et 0,5 dg/min. Ces résines présentent toutes un durcissement élongationnel et ont une teneur en insolubles dans le xylène à 130°C inférieure au%.

### Exemple de référence 6 et exemples 7 et 8 (conformes à l'invention): polyoléfines greffées à base de propylène (PP) neutralisées à l'acétate de Zn

Ces exemples ont été entrepris avec des réactifs et des conditions opératoires identiques à celles des exemples 1 et 2.

Les quantités de réactifs utilisées ainsi que les résultats obtenus figurent dans le tableau ci-dessous :

| Ex. | Zn(Ac)2 | Na2CO3 | Zn | N | MFI | Tf | Tc | PIO2 | Odeur |
|---|---|---|---|---|---|---|---|---|---|
| C6 | 3,0 | 0 | 2 | 65 | 9,8 | 163 | 113 | > 60 | 1 |
| 7 | 2,7 | 1,7 | 1,9 | 68 | 1,7 | 164 | 122 | > 60 | 0 |
| 8 | 2,5 | 1,5 | 1,7 | 59 | 3,3 | 165 | 122 | > 60 | 0 |

| | | | | | | | | | |
|---|---|---|---|---|---|---|---|---|---|
| Dans ce tableau : Zn(Ac)2 est la quantité de Zn(Ac)2 utilisée exprimée en éq.mol. Idem pour Na2CO3 Zn est la teneur en Zn de la résine modifiée mesurée par fluorescence X et exprimée en g /kg N est le pourcentage de fonctions AM neutralisées mesurée par spectrométrie IR le MFI est mesuré à 230°C, sous 2,16 kg et exprimé en dg/min Tf et Tc sont respectivement les températures de fusion et de cristallisation mesurées par DSC PIO2 est la résistance à l'oxydation telle que définie précédemment L'odeur : 0 = pas d'odeur; 1 = légère odeur ; 2 = odeur prononcée. | | | | | | | | | |

Les résines issues de ces exemples présentent toutes un durcissement élongationnel et ont une teneur en insolubles dans le xylène à 130°C inférieure au%.

La résine issue de l'exemple 7 a fait l'objet de déterminations complémentaires : son module E vaut 2206 MPa, son YI 29,4, sa HDT 125°C sous 0,45 MPa et 64°C sous 1,8 MPa (voir définitions et méthodes de mesure de ces paramètres ci avant), ainsi qu'une appréciation organoleptique favorable (tests de dégustation après macération d'eau dans des récipients à base des polyoléfines modifiées, par comparaison avec une eau de référence ; la mention favorable correspond à un goût nul ou faible).

### Exemple de référence 9 et exemples 10 à 15 : polyoléfines greffées à base d'éthylène (PE) neutralisées an NaLac

Ces exemples ont été entrepris avec des réactifs et des conditions opératoires identiques à celles des exemples 3 à 5 mais avec comme résine de départ, une résine PRIEX^{®} 12030 de SOLVAY. Il s'agit d'un HDPE greffé anhydride maléique à raison de 0,14% en poids qui présente un MFI_{5 kg, 8/2}, _{190ºC} de 30 g/10min.

Les quantités de réactifs **utilisées** ainsi que les résultats obtenus figurent dans le tableau ci-dessous :

| Ex. | NaLac | Na2CO3 | Na | N | MFI | Tf | Tc | PIO2 | Odeur |
|---|---|---|---|---|---|---|---|---|---|
| C9 | 0,5 | 0 | - | - | 20,0 | - | - | - | - |
| 10 | 0,5 | 1 | - | - | 2,4 | - | - | - | - |
| 11 | 0,75 | 1 | - | - | 2,4 | - | - | - | - |
| 12 | 1 | 1 | - | - | 2,5 | - | - | - | - |
| 13 | 0,5 | 1,5 | - | - | 1,8 | - | - | - | - |
| 14 | 0,5 | 1,6 | 1,4 | 64 | 1,4 | 135 | 113 | > 60 | 0 |
| 15 | 0,4 | 0,5 | 0,7 | 43 | 4,3 | 135 | 113 | > 60 | 0 |

| | | | | | | | | | |
|---|---|---|---|---|---|---|---|---|---|
| Dans ce tableau : NaLac est la quantité de NaLac utilisée exprimée en éq.mol. Idem pour Na2CO3 Na est la teneur en Na de la résine modifiée mesurée par fluorescence X et exprimée en g /kg N est le pourcentage de fonctions AM neutralisées mesurée par spectrométrie IR le MFI est mesuré à 230°C, sous 5 kg et exprimé en dg/min Tf et Tc sont respectivement les températures de fusion et de cristallisation mesurées par DSC PIO2 est la résistance à l'oxydation telle que définie précédemment L'odeur : 0 = pas d'odeur; 1 = légère odeur ; 2 = odeur prononcée. | | | | | | | | | |

Les résines issues des exemples 14 et 15 ont fait l'objet de déterminations complémentaires qui ont montré que :
- elles présentent toutes deux un durcissement élongationnel, ont une teneur en insolubles dans le xylène à 130°C inférieure au % ainsi qu'une appréciation organoleptique favorable
- elles ont respectivement un module E de 1009 et 1033 MPa et un YI de 27 et 22,9.

### Exemple 16 (conforme à l'invention) : polyoléfine greffée à base de propylène (PP) neutralisée au lactate de sodium (NaLac)

On a utilisé comme résine de départ, une résine PRIEX^{®} 20015, un polypropylène homopolymère modifié chimiquement par SOLVAY. Il s'agit d'un PP greffé anhydride maléique à raison de 0,05% en poids qui présente un MFI_{2,16kg,230ºC} de 15 g/10 min.

L'agent neutralisant était le NaLac (lactate de sodium : mélange de D- et L-isomère de chez ACROS : 256,4 ml de solution à 60% en poids par litre de solution aqueuse), utilisé à raison de 5 éq.mol.

Le Na2CO3 a été utilisé à raison de 2 équivalents molaires.

On a appliqué les mêmes paramètres expérimentaux que ceux appliqués pour les exemples précédents (cf exemples 1 et 2 pour les détails).

Le MFI (2,16 kg, 230°C) de la résine modifiée ainsi obtenue était de 1 g/ 10 min et possédait une teneur en sodium de 0,88 g/kg. Sa température de fusion était de 167°C.

### Exemple de référence 17 (non conforme à l'invention) et exemple 18 (conforme à l'invention) : composition comprenant un polypropylène non fonctionnalisé respectivement sans/avec additif polyoléfine greffée à base de propylène (PP) neutralisée au lactate de sodium (NaLac)

On a utilisé pour composition de référence, ci-après composition (CR17), une composition à l'état de granules, composée dé polypropylène homopolymère ELTEX® P HL et d'un agent stabilisant phénol encombré stériquement (composition commercialisée par BP). Cette composition avait un MFI (2,16 kg, 230°C) de 2,5 g/10 min, une température de fusion de 161°C et une densité de 900 kg/m³.

On a préparé une composition conforme à l'invention, ci-après composition (CI18), composée de 95% en poids de la composition (CR17) et de 5% en poids de la polyoléfine greffée à base de PP neutralisée au NaLac synthétisée à l'exemple 16. A cet effet, on a utilisé une extrudeuse PRISM^{®} double vis co-rotative de diamètre 15 mm et de longueur 24 cm (soit un rapport longueur sur diamètre de 16), dont le fourreau est constitué de 2 zones indépendantes (Z1 et Z2) ainsi que d'une convergence et d'une filière à trou. On a appliqué une vitesse des vis de 200 tr/min, un débit de 2 kg/h et le profil de température était le suivant : Z1 (zone d'alimentation) : 230°C ; Z2 : 230°C ; convergence et filière : 230°C.

Test de traction à 23°C. Ce test a été effectué selon les normes ISO 527-1 et 2 ; le vitesse du module était de 1 mm/min ; la vitesse d'essai était de 50 mm/min ; l'écartement entre les outillages était de 115 mm ; la course standard était de 50 mm ; le type d'éprouvette était le type ISO 1B (115) le tracteur de force était de type « traction de 1 kN - sans four»; le capteur de course était un capteur NOHZWICK Multisens et Traverse ; la température était de 23°C.

On a obtenu les résultats présentés dans le tableau suivant :

| | Composition | Composition |
|---|---|---|
| | (CR17) | (CI18) |
| Module 0,05-0,25% (en MPa) | 1749 | 2127 |
| Elongation au seuil (« yield », en %) | 8,5 | 7,0 |
| Contrainte au seuil d'écoulement (en MPa) | 37,0 | 39,3 |
| Contrainte à la rupture (en MPa) | 14,9 | 24,3 |

### Détermination de la température de fléchissement sous charge (HDT)

Cette détermination a été effectuée selon la norme ISO 75-2 (9/1993) sous une charge soit de 0,45 MPa, soit de 1,8 MPa. On a effectué une montée en température de 120°C/h ; la précharge était de 50 g; le fluide de transfert de chaleur utilisé était de l'huile au silicone ; on a utilisé des éprouvettes injectées, ébavurées et découpées à un longueur de 120 ± 10 mm ; on a orienté les éprouvettes sur le côté ; la distance entre les supports était de 100 ± 2 mm.

On a obtenu les résultats présentés dans le tableau ci-dessous :

| | Composition | Composition |
|---|---|---|
| | (CR17) | (CI18) |
| HDT sous une charge de 0,45 MPa (en °C) | 110 | 119 |
| HDT sous une charge de 1,8 MPa (en °C) | 59 | 68 |

Test VICAT. On a effectué le test VICAT selon la norme ISO 306 (1987). Tant pour la mesure VICAT 10N que pour la mesure VICAT 50 N, la pénétration était de 1 mm.

On a obtenu les résultats présentés dans le tableau ci-dessous :

| | Composition | Composition |
|---|---|---|
| | (CR17) | (CI18) |
| Température de ramollissement | | |
| VICAT 10 N (en °C) | 157 | 159 |
| Température de ramollissement | | |
| VICAT 50 N (en °C) | 101 | 107 |

Détermination de la résistance à l'impact - Test du poids tombant instrumenté (PTI). On a effectué le test du PTI selon la norme ISO 7765-2. La température était de 23 °C ; l'énergie et la vitesse théoriques du percuteur valaient respectivement 247,5 J et 4,43 m/s ; la masse du percuteur était de 25,24 kg ; la hauteur de chute était de 1 m ; les diamètres du percuteur et du support étaient respectivement de 20 et de 40 mm.

On a obtenu les résultats présentés dans le tableau ci-dessous :

| | Composition | Composition |
|---|---|---|
| | (CR17) | (CI18) |
| Force maximale (en N) | 445 | 688 |
| Déplacement à la force maximale (en mm) | 3,3 | 5,2 |
| Energie à la force maximale (en J) | 0,78 | 1,73 |
| Résilience (en J/mm) | 0,47 | 0,87 |

Test de fluage. On a effectué ce test sous une contrainte de 10 MPa sur une éprouvette ISO1A et à une température de 23°C.

On a obtenu les résultats présentés dans le tableau ci-après :

| | Composition | Composition |
|---|---|---|
| | (CR17) | (CI18) |
| Module après 0,01 h (enMPa) | 1756 | 1914 |
| Module après 0,1 h (en MPa) | 1420 | 1561 |
| Module après 1 h (en MPa) | 1113 | 1254 |
| Module après 10 h (en MPa) | 787 | 918 |
| Module après 1 jour (en MPa) | 680 | 807 |
| Module après 100 h (en MPa) | 548 | 652 |

### Exemple 19 (conforme à l'invention) : polyoléfine greffée à base de propylène (PP) neutralisée au lactate de sodium (NaLac)

On a utilisé comme résine de départ, une résine PRIEX^{®} 20093, un polypropylène homopolymère modifié chimiquement par SOLVAY. Il s'agit d'un PP greffé anhydride maléique à raison de 0,26% en poids qui présente une masse moléculaire moyenne en poids de 75000.

On a utilisé l'agent neutralisant NaLac et le Na2CO3, en même quantité et de la même façon qu'à l'exemple 16.

On a également appliqué les mêmes paramètres expérimentaux que ceux appliqués pour les exemples précédents.

Le MFI (2,16 kg, 230°C) de la résine modifiée ainsi obtenue était de 1,4 g/10 min et possédait une teneur en sodium de 6,6 g/kg. Sa température de fusion était de 135°C.

### Exemple de référence 20 (non conforme à l'invention) et exemple 21 (conforme à l'invention) : composition comprenant un polypropylène non fonctionnalisé respectivement sans/avec additif polyoléfine greffée à base de propylène (PP) neutralisée au lactate de sodium (NaLac)

On a utilisé comme composition de référence une composition (CR20) identique en tous points à la composition (CR17).

On a préparé une composition conforme à l'invention, ci-après composition (CI21), composée de 95% en poids de la composition (CR20) et de 5% en poids de la polyoléfine greffée à base de PP neutralisée au NaLac synthétisée à l'exemple 19.

Tests pour évaluer la cohésion et l'adhésion sur différents supports. Ces tests ont été effectués selon la norme NF T 76-104.

Les éprouvettes de cisaillement ont été préparées par pressage, à une température de 230°C et sous une pression de 20 bars :
- entre deux plaques en aluminium préalablement immergées pendant 10 minutes dans un bain sulfochromique, ou
- entre deux plaques en aluminium préalablement immergées pendant 10 minutes dans un bain alcalin, ou encore
- entre deux plaques en acier préalablement immergées pendant 10 minutes dans un bain sulfochromique.

On a déterminé la contrainte à la rupture des éprouvettes de cisaillement dans un test de cisaillement effectué à l'aide d'une machine MTS 50LP équipée d'un capteur de 50 kN

On a obtenu les résultats suivants :

| Contrainte de rupture (en MPa) | Composition | Composition |
|---|---|---|
| pour le couple support / bain = | (CR20) | (CI21) |
| Support en aluminium / Bain sulfochromique | 1 | 7 |
| Support en aluminium / Bain alcalin | 0,4 | 4 |
| Support en acier / Bain sulfochromique | 2 | 7 |

### Exemples 22 à 24 (conformes à l'invention) : polyoléfines copolymères à blocs greffées, neutralisées au lactate de sodium (NaLac)

On a utilisé :
- une résine KRATON^{®} FG1901X copolymère à blocs styrène-éthylène/butylène-styrène contenant environ 30% en poids de blocs de polystyrène, greffé anhydride maléique, commercialisé par KRATON Polymers. Selon des déterminations réalisées par nos soins, la résine utilisée présentait un taux de greffage en anhydride maléique d'environ 1,1% en poids et un MFI_{2.16 kg, 230°C} de 6.2 g/10min,
- des solutions de lactate de sodium et de carbonate de soude à 200 g/l, en des quantités respectives de 0, 129 (exemple 22), 0,258 (exemple 23) et 0,323 (exemple 24) éq.mol. théoriques (équivalents molaires par rapport au nombre de fonctions acides carboxyliques de la résine) pour le lactate de sodium d'une part, et de 0,258 (exemple 22), 0,517 (exemple 23) et 0,647 (exemple 24) éq.mol. théoriques (équivalents molaires par rapport au nombre de fonctions acides carboxyliques de la résine) pour le Na2CO3 d'autre part,
- une extrudeuse CLEXTRAL modèle BC 21 qui est une extrudeuse double vis co-rotative de diamètre 25 mm et de longueur 1200 mm (L/D = 40) avec un fourreau constitué de 12 zones (Z1 à Z12) indépendantes ainsi que d'une convergence et d'une filière,
- une vitesse des vis de 300 tr/min, un débit de 3 kg/h et le profil de température suivant : Z1 (alimentation de la résine) : 100°C; Z2 à Z4( fusion) : Z2 : 200 °C ; Z3 : 220 °C, Z4 : 230°C ; Z5 (co-injection du NaLac + Na2CO3) : 220 °C ; Z6 à Z10 (réaction, dégazage à pression atmosphérique, réaction, dégazage sous vide à une consigne de 2 mbar) : 240 sauf Z10 : 220 °C ; Z11et Z12 : 220 °C ; convergence et filière : 220 °C,
- un injecteur haute pression pour la co-injection du NaLac + Na2CO3 en Z5.

On a obtenu des résines modifiées ayant un MFI_{21,6 kg, 230 °C} de 31 g/10 min pour l'exemple 22, de 7,7 g/10 min pour l'exemple 23 et de 3,2 g/10 min. pour l'exemple 24.

On a constaté que plus on augmentait la dose de NaLac + Na2CO3, plus l'indice de jaune du polymère obtenu diminuait (l'indice de jaune sur granules suivant les normes ASTMD-1925 et ASTME-313 était de 38 pour l'exemple 22, de 28 pour l'exemple 23 et de 27 pour l'exemple 24).

Les teneurs en Na (mesurées par FX) valaient respectivement de 2,0 g/kg pour l'exemple 22, de 3,9 g/kg pour l'exemple 23 et de 4,6 g/kg pour l'exemple 24.

### Exemples 25 à 27 (conformes à l'invention) : compositions comprenant une polyoléfine copolymère à blocs greffée, neutralisée au lactate de sodium (NaLac)

On a préparé des compositions conformes à l'invention, ci-après compositions (CI22 à CI24), composées de :
- 57 % en poids de polypropylène homopolymère ELTEX^{®} P HL stabilisé par un phénol encombré stériquement (commercialisé par BP), ayant un MFI₂,_{16 kg, 230 °C} de 2,5 g/10 min, une température de fusion de 161°C) et une densité de 900 kg/m³,
- 3% en poids du polypropylène homopolymère greffé modifié chimiquement de l'exemple 16,
- 3% en poids du polymère synthétisé à l'exemple 22 (CI22) ou 23 (CI23) ou 24 (CI24), et
- 37 % en poids de polymère KRATON^{®} G 1652 copolymère à blocs non fonctionnalisé styrène-éthylène/butylène-styrène contenant environ 30% en poids de blocs de polystyrène, commercialisé par KRATON Polymers.

Les compositions ainsi préparées présentent un ensemble avantageux de propriétés.

## Revendications

1. - Procédé pour la modification d'une polyoléfine greffée avec des groupes acides ou anhydrides par neutralisation au moins partielle de ces groupes avec au moins un agent neutralisant comprenant un sel organique (1) libérant un acide organique (I) lors de la neutralisation, **caractérisé en ce que** l'on fait réagir l'acide organique (I) issu de la neutralisation de la polyoléfine greffée avec au moins un sel inorganique (2).

2. - Procédé selon la revendication 1, **caractérisé en ce que** la polyoléfine greffée est choisie parmi les polymères de l'éthylène et/ou du propylène greffés à l'anhydride maléique.

3. - Procédé selon la revendication 1 ou 2, **caractérisé en ce que** la polyoléfine greffée est un copolymère à blocs greffé.

4. - Procédé selon l'une quelconque des revendications précédentes, **caractérisé en ce que** le sel organique (1) est liquide à la température de mise en oeuvre.

5. - Procédé selon la revendication précédente, **caractérisé en ce que** le sel organique (1) est choisi parmi l'acétate de Zn et le lactate de Na.

6. - Procédé selon la revendication précédente, **caractérisé en ce que** le sel organique (1) et le sel inorganique (2) sont introduits dans la polyoléfine greffée :
- simultanément dans le cas où le sel organique (1) est le lactate de Na
- de manière différée lorsque le sel organique (1) est l'acétate de Zn.

7. - Procédé selon l'une quelconque des revendications précédentes, **caractérisé en ce que** le sel organique (1) est introduit dans la polyoléfine greffée sous forme de solution aqueuse.

8. - Procédé selon l'une quelconque des revendications précédentes, **caractérisé en ce que** le sel inorganique (2) est choisi parmi les carbonates de métaux alcalins, alcalino-terreux et de terres rares.

9. - Procédé selon l'une quelconque des revendications précédentes, **caractérisé en ce que** le sel inorganique (2) est introduit dans la polyoléfine greffée sous forme de solution aqueuse.

10. - Polyoléfine modifiée susceptible d'être obtenue par un procédé selon l'une quelconque des revendications 1 à 9, comprenant des groupements acides ou anhydrides au moins partiellement neutralisés par des ions métalliques, présentant :
- une teneur en insolubles dans le xylène à 130°C inférieure à 1%
- une augmentation exponentielle de la viscosité élongationnelle en fonction du temps,
- un MFI inférieur ou égal à 6 dg/min, et
- une absence d'odeur.

11. - Polyoléfine modifiée selon la revendication 10, **caractérisée en ce qu'**elle présente un indice de jaune, mesuré selon les normes ASTM D-1925 et ASTM E-313, inférieur à 40.

12. - Polyoléfine modifiée selon la revendication 10 ou 11, **caractérisée en ce qu'**elle bénéficie d'une appréciation organoleptique favorable, déterminée par un test de dégustation après macération d'eau dans un récipient à base de ladite polyoléfine modifiée.

13. - Composition polymérique contenant
(A) au moins un polymère, et
(B) au moins une polyoléfine modifiée choisie parmi les polyoléfines modifiées obtenues par le procédé selon l'une quelconque des revendications 1 à 9 et les polyoléfines modifiées selon l'une quelconque des revendications 10 à 12.

14. - Composition selon la revendication 13, **caractérisé en ce que** la polyoléfine modifiée est choisie parmi les polyoléfines modifiées obtenues par le procédé selon l'une quelconque des revendications 1 à 9.

15. - Composition selon la revendication 13 ou 14, **caractérisé en ce que** le polymère est choisi parmi les polymères de l'éthylène et/ou du propylène non fonctionnalisés.

16. - Composition selon l'une quelconque des revendications 13 à 15, **caractérisé en ce que** le poids de (A), rapporté au poids total de la composition, est supérieur à 75%.

17. - Composition selon l'une quelconque des revendications 13 à 16, **caractérisé en ce que** le poids de (B), rapporté au poids total de la composition, est inférieur à 10%.

18. - Article comprenant la composition selon l'une quelconque des revendications 13 à 17.

19. - Article comprenant une polyoléfine modifiée choisie parmi les polyoléfines modifiées obtenues par le procédé selon l'une quelconque des revendications 1 à 9 et les polyoléfines modifiées selon l'une quelconque des revendications 10 à 12.

20. - Article selon la revendication 18 ou 19, qui est choisi parmi les fibres de verre, les fibres naturelles et les fils métalliques ensimés d'une couche de la composition ou de la polyoléfine modifiée, ainsi que parmi les surfaces métalliques et les surfaces non métalliques revêtues d'une couche de la composition ou de la polyoléfine modifiée.

21. - Article selon la revendication 18 ou 19, qui est choisi parmi les tubes, les films et les feuilles, les fibres, les mousses et les corps creux soufflés faits en la composition ou en la polyoléfines modifiée.

22. - Article selon la revendication 18 ou 19, qui est une pièce d'un véhicule automoteur sélectionnée parmi les réservoirs à carburant, les tubulures à carburant, les pare-chocs et les tableaux de bord.

23. - Utilisation de la composition selon l'une quelconque des revendications 13 à 17, en tant qu'agent de compatibilisation et/ou de dispersion d'une polyoléfine avec un polymère ou une matière de charge qui est incompatible avec la polyoléfine.

24. - Utilisation d'une polyoléfine modifiée choisie parmi les polyoléfines modifiées obtenues par le procédé selon l'une quelconque des revendications 1 à 9 et les polyoléfines modifiées selon l'une quelconque des revendications 10 à 12, en tant qu'agent de compatibilisation et/ou de dispersion d'une polyoléfine avec un polymère ou une matière de charge qui est incompatible avec la polyoléfine.

## Claims

1. - Process for modifying a polyolefin grafted with acid or anhydride groups, by at least partial neutralization of these groups with at least one neutralizing agent comprising an organic salt (1) that releases an organic acid (I) during the neutralization, **characterized in that** the organic acid (I) derived from the neutralization of the grafted polyolefin is reacted with at least one inorganic salt (2).

2. - Process according to Claim 1, **characterized in that** the grafted polyolefin is chosen from polymers of ethylene and/or of propylene, grafted with maleic anhydride.

3. - Process according to Claim 1 or 2, **characterized in that** the grafted polyolefin is a grafted block copolymer.

4. - Process according to any one of the preceding claims, **characterized in that** the organic salt (1) is liquid at the processing temperature.

5. - Process according to the preceding claim, **characterized in that** the organic salt (1) is chosen from Zn acetate and Na lactate.

6. - Process according to the preceding claim, **characterized in that** the organic salt (1) and the inorganic salt (2) are introduced into the grafted polyolefin :
- simultaneously when the organic salt (1) is Na lactate,
- in a deferred way when the organic salt (1) is Zn acetate.

7. - Process according to any one of the preceding claims, **characterized in that** the organic salt (1) is introduced into the grafted polyolefin in the form of an aqueous solution.

8. - Process according to any one of the preceding claims, **characterized in that** the inorganic salt (2) is chosen from alkali metal carbonates, alkaline earth metal carbonates and rare earth metal carbonates.

9. - Process according to any one of the preceding claims, **characterized in that** the inorganic salt (2) is introduced into the grafted polyolefin in the form of an aqueous solution.

10. - Modified polyolefin that can be obtained by a process according to any one of the preceding claims, comprising acid or anhydride groups that are at least partially neutralized by metal ions, and exhibiting:
- a content of products insoluble in xylene at 130°C of less than 1 %,
- an exponential increase in elongational viscosity as a function of time, and
- an MFI of less than or equal to 6 dg/min, and
- an absence of odour.

11. - Modified polyolefin according to Claim 10, **characterized in that** it has a yellow index, measured according to standards ASTM D-1925 and ASTM E-313, of less than 40.

12. - Modified polyolefin according to Claim 10 or 11, **characterized in that** it benefits from a favourable organoleptic assessment, determined by means of a taste test after soaking of water in a container made of said modified polyolefin.

13. - Polymeric composition containing
(A) at least one polymer, and
(B) at least one modified polyolefin chosen from the modified polyolefins obtained by the process according to any one of Claims 1 to 9 and the modified polyolefins according to any one of Claims 10 to 12.

14. - Composition according to Claim 13, **characterized in that** the modified polyolefin is chosen from modified polyolefins obtained by the process according to any one of Claims 1 to 9.

15. - Composition according to Claim 13 or 14, **characterized in that** the polymer is chosen from non-functionalized polymers of ethylene and/or of propylene.

16. - Composition according to any one of Claims 13 to 15, **characterized in that** the weight of (A), relative to the total weight of the composition, is greater than 75 %.

17. - Composition according to any one of Claims 13 to 16, **characterized in that** the weight of (B), relative to the total weight of the composition, is less than 10 %.

18. - Article comprising the composition according to any one of Claims 13 to 17.

19. - Article comprising a modified polyolefin chosen from the modified polyolefins obtained by the process according to any one of Claims 1 to 9 and the modified polyolefins according to any one of Claims 10 to 12.

20. - Article according to Claim 18 or 19, which is chosen from glass fibres, natural fibres and metal wires sized with a layer of the composition or of the modified polyolefin, and also from metal surfaces and non-metal surfaces coated with a layer of the composition or of the modified polyolefin.

21. - Article according to Claim 18 or 19, which is chosen from tubes, films and sheets, fibres, foams and blow-moulded hollow bodies made of the composition or of the modified polyolefin.

22. - Article according to Claim 18 or 19, which is a part for an automotive vehicle, selected from fuel tanks, fuel pipes, bumpers and dashboards.

23. - Use of the composition according to any one of Claims 13 to 17, as an agent for compatibilization and/or for dispersion of a polyolefin with a polymer or a filler that is incompatible with the polyolefin.

24. - Use of a modified polyolefin chosen from the modified polyolefins obtained by the process according to any one of Claims 1 to 9 and the modified polyolefins according to any one of Claims 10 to 12, as an agent for compatibilization and/or for dispersion of a polyolefin with a polymer or a filler that is incompatible with the polyolefin.

## Patentansprüche

1. Verfahren zur Modifizierung eines mit Säure- oder Anhydridgruppen gepfropften Polyolefins durch zumindest teilweise Neutralisation dieser Gruppen mit mindestens einem Neutralisationsmittel, das ein organisches Salz (1) umfaßt, das bei der Neutralisation eine organische Säure (I) freisetzt, **dadurch gekennzeichnet, daß** man die aus der Neutralisation des gepfropften Polyolefins stammende organische Säure (I) mit mindestens einem anorganischen Salz (2) umsetzt.

2. Verfahren nach Anspruch 1, **dadurch gekennzeichnet, daß** man das gepfropfte Polyolefin unter Polymeren von Ethylen und/oder Propylen, die mit Maleinsäureanhydrid gepfropft sind, auswählt.

3. Verfahren nach Anspruch 1 oder 2, **dadurch gekennzeichnet, daß** es sich bei dem gepfropften Polyolefin um ein gepfropftes Blockcopolymer handelt.

4. Verfahren nach einem der vorhergehenden Ansprüche, **dadurch gekennzeichnet, daß** das organische Salz (1) bei der Verwendungstemperatur flüssig ist.

5. Verfahren nach dem vorhergehenden Anspruch, **dadurch gekennzeichnet, daß** man das organische Salz (1) unter Zn-Acetat und Na-Lactat auswählt.

6. Verfahren nach dem vorhergehenden Anspruch, **dadurch gekennzeichnet, daß** man das organische Salz (1) und das anorganische Salz (2):
- in dem Fall, daß es sich bei dem organischen Salz (1) um Na-Lactat handelt, gleichzeitig
- wenn es sich bei dem organischen Salz (1) um Zn-Acetat handelt, zeitversetzt
in das gepfropfte Polyolefin einträgt.

7. Verfahren nach einem der vorhergehenden Ansprüche, **dadurch gekennzeichnet, daß** man das organische Salz (1) in Form einer wäßrigen Lösung in das gepfropfte Polyolefin einträgt.

8. Verfahren nach einem der vorhergehenden Ansprüche, **dadurch gekennzeichnet, daß** man das anorganische Salz (2) unter Alkalimetall-, Erdalkalimetall- und Seltenerdmetallcarbonaten auswählt.

9. Verfahren nach einem der vorhergehenden Ansprüche, **dadurch gekennzeichnet, daß** man das anorganische Salz (2) in Form einer wäßrigen Lösung in das gepfropfte Polyolefin einträgt.

10. Modifiziertes Polyolefin, das nach einem Verfahren gemäß einem der Ansprüche 1 bis 9 erhältlich ist, zumindest teilweise durch Metallionen neutralisierte Säure- oder Anhydridgruppen enthält und
- einen bei 130°C in Xylol unlöslichen Anteil von weniger als 1 %,
- eine exponentielle Zunahme der Dehnviskosität als Funktion der Zeit,
- einen MFI kleiner gleich 6 dg/min und
- Geruchsfreiheit
aufweist.

11. Modifiziertes Polyolefin nach Anspruch 10, **dadurch gekennzeichnet, daß** es einen gemäß den Normen ASTM D-1925 und ASTM E-313 gemessenen Gelbwert von weniger als 40 aufweist.

12. Modifiziertes Polyolefin nach Anspruch 10 oder 11, **dadurch gekennzeichnet, daß** es von einer günstigen organoleptischen Beurteilung, bestimmt durch einen Geschmackstest nach Einlegen eines Behälters auf Basis des modifizierten Polyolefins in Wasser, profitiert.

13. Polymerzusammensetzung, enthaltend
(A) mindestens ein Polymer und
(B) mindestens ein unter den nach dem Verfahren gemäß einem der Ansprüche 1 bis 9 erhaltenen modifizierten Polyolefinen und den modifizierten Polyolefinen gemäß einem der Ansprüche 10 bis 12 ausgewähltes modifiziertes Polyolefin.

14. Zusammensetzung nach Anspruch 13, **dadurch gekennzeichnet, daß** das modifizierte Polyolefin unter den nach dem Verfahren gemäß einem der Ansprüche 1 bis 9 erhaltenen modifizierten Polyolefinen ausgewählt ist.

15. Zusammensetzung nach Anspruch 13 oder 14, **dadurch gekennzeichnet, daß** das Polymer unter nichtfunktionalisierten Polymeren von Ethylen und/oder Propylen ausgewählt ist.

16. Zusammensetzung nach einem der Ansprüche 13 bis 15, **dadurch gekennzeichnet, daß** das Gewicht von (A), bezogen auf das Gesamtgewicht der Zusammensetzung, mehr als 75 % beträgt.

17. Zusammensetzung nach einem der Ansprüche 13 bis 16, **dadurch gekennzeichnet, daß** das Gewicht von (B), bezogen auf das Gesamtgewicht der Zusammensetzung, weniger als 10 % beträgt.

18. Gegenstand, umfassend die Zusammensetzung gemäß einem der Ansprüche 13 bis 17.

19. Gegenstand, umfassend ein unter den nach dem Verfahren gemäß einem der Ansprüche 1 bis 9 erhaltenen modifizierten Polyolefinen und den modifizierten Polyolefinen gemäß einem der Ansprüche 10 bis 12 ausgewähltes modifiziertes Polyolefin.

20. Gegenstand nach Anspruch 18 oder 19, der unter Glasfasern, Naturfasern und Metallfasern, die mit einer Schicht der Zusammensetzung oder des modifizierten Polyolefins geschlichtet sind, und unter Metall- und Nichtmetalloberflächen, die mit einer Schicht der Zusammensetzung oder des modifizierten Polyolefins überzogen sind, ausgewählt ist.

21. Gegenstand nach Anspruch 18 oder 19, ausgewählt unter Rohren, Filmen und Folien, Fasern, Schaumstoffen und blasgeformten Hohlkörpern aus der Zusammensetzung oder dem modifizierten Polyolefin.

22. Gegenstand nach Anspruch 18 oder 19, bei dem es sich um ein unter Kraftstoffbehältern, Kraftstoffleitungen, Stoßdämpfern und Armaturenbrettern ausgewähltes Fahrzeugteil handelt.

23. Verwendung der Zusammensetzung nach einem der Ansprüche 13 bis 17 als Verträglichkeitsvermittler und/oder Dispergiermittel für ein Polyolefin mit einem mit dem Polyolefin unverträglichen Polymer oder Füllstoff.

24. Verwendung eines unter den nach dem Verfahren gemäß einem der Ansprüche 1 bis 9 erhaltenen modifizierten Polyolefinen und den modifizierten Polyolefinen gemäß einem der Ansprüche 10 bis 12 ausgewählten modifizierten Polyolefins als Verträglichkeitsvermittler und/oder Dispergiermittel für ein Polyolefin mit einem mit dem Polyolefin unverträglichen Polymer oder Füllstoff.
